(19) Europäisches Patentamt / European Patent Office / Office européen des brevets

(11) **EP 2 216 300 A1**

(12) **EUROPEAN PATENT APPLICATION**

(43) Date of publication:
**11.08.2010 Bulletin 2010/32**

(51) Int Cl.:
*C02F 1/70* (2006.01)    *B01F 5/04* (2006.01)
*B01F 5/06* (2006.01)    *B01F 3/08* (2006.01)

(21) Application number: **10466001.4**

(22) Date of filing: **18.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **23.01.2009 CZ 20090027**

(71) Applicants:
• **Lysytchuk, Oleg**
  **700 30 Ostrava-Zábreh (CZ)**

• **Hégr, Jaroslav**
  **772 00 Olomouc (CZ)**

(72) Inventors:
• **Lysytchuk, Oleg**
  **700 30 Ostrava-Zábreh (CZ)**
• **Hégr, Jaroslav**
  **772 00 Olomouc (CZ)**

(74) Representative: **Soukup, Petr**
  **Videnska 8**
  **772 00 Olomouc (CZ)**

(54) **Method and device for water purification**

(57)    A method of water purification, especially of communal sewage water and water with contain of heavy metals and/or organic contaminants whose essence lies in the fact that into the polluted water brought under the pressure (p) of size

$$p = 0{,}1 \text{ to } 4{,}0 \cdot 10^5 \text{ N.m}^{-2}$$

from bottom into a turbulent reactor (1) are to its mixing chamber (16) in contra flow direction dosed nanoparticles of metals or other non-toxic matters or their mixtures, whose size ranges from 30 to 400 nm and whose specific weight ρ has value

$$\rho \geq 10 \text{ N.m}^{-3}$$

and arisen mixture is after blending taken away by turbulent flowing at mutual interaction of the nanoparticles and undesired admixtures to filtration or sedimentation. A device for water purification consists of at least the turbulent reactor (1), created with a vertical or a crossway upward situated cylindrical tubular body (11), which is in its lower part finished with a horizontal elbow (12) creating a mixing chamber (16), where the elbow (12) is procured with an inlet branch (122) of an inflow of polluted water and with an outlet branch (123), whereas into the body (11) is from above installed a flow pipeline (13) for dosing of reaction mixture, which goes into the mixing chamber (4) and is opened into an additional tank (5) of the reaction mixture.

FIG. 1

**Description**

Technical field

This invention falls into area of communal management and concerns water purification method and device for this process with the use to purify potable water and also communal sewage water or industrial sewage water, eventually to water preparation for different technological processes.

Present prior art

We know many methods of water purification and devices for this process whose technological conditions and construction parameters depend on the kind of pollution and amount of purified water. There are used technologies with continuous and discontinuous flow of purified water, whereas the reactors, tanks and cleaning zones construction depend on the kind and the size of pollution source. The devices can be created with only one reactor, inside of which are mutually connected purifying zones or these can be sets of high-capacity tanks procured with number of technological components, as are blenders, aerators and so one. The technology of purification can be based on purely biological principle of aerobic or anaerobic character, with industrial heavily polluted water are then used different coagulants, sorbents or flocculants chosen according to the kind of the pollution.

With a development of new technologies in different industrial branches, whose waste are heavy metals, radioactive elements, allied substances with phosphorus and nitrogen, macromolecular organic allied substances and other chemical elements harmful for environment, it is desired to develop also new technologies of water purification. Therefore the aim of this invention is to introduce new tested efficient method of water purification which enables efficiently remove basically all kinds of organic and inorganic pollution and a device for use of this sewage disposal technology.

The essence of the invention

The set aim is reached with the invention whereby the method of water purification, especially communal sewage water and water with contain of heavy metal and/or organic contaminants, whose essence lies in fact that into polluted water brought under the pressure (p) of value

$$p \; = \; 0,1 \text{ to } 4,0 \, . \, 10^5 \text{ N.m}^{-2}$$

from below into turbulent reactor are into its mixing chamber in counter direction doted nanoparticles of metals or other non-toxic substances or their mixtures, whose size varies in the range of 30 to 400 nm and whose specific weight $\rho$ has value

$$\rho \; \geq \; 10 \text{ N.m}^{-3}$$

and arisen mixture is after mixing brought by turbulent flow at mutual action of nanoparticles and unwelcome admixtures to filtration or sedimentation.

In advantageous design is the mixture of purified water and the nanoparticles consequently after turbulent flow put through before outflow to filtration or sedimentation to labyrinth flow, whereas the material for production of nanoparticles used in purification process is chosen form the group iron and/or silicon and/or silver and/or gold and/or zinc and/or copper and/or titan and or nickel and/or aluminium and/or carbon and/or lead or eventually is made of mixtures of these materials or their oxides.

The next essence of the invention is a device for water purification, especially water with contain of heavy metals and/or organic contaminants, whose essence lies in fact that it consists of at least a turbulent reactor, created with vertical or crossways upward situated cylindrical tubular body, which is in its lower part finished with horizontal elbow creating a mixing chamber, where the elbow is procured with inlet branch of polluted water inflow and with an outlet branch, whereas into the body is from the top installed inlet pipeline for dosing of reaction mixture, whereas the inlet pipeline is flown into the mixing chamber and is installed into additional tank of the reaction mixture.

In advantageous design is the additional tank procured with a dosing pump and a mixing device of the reaction mixture, an inner surface of the body is procured with a system of paddles directed crossway downward against the flow of the water, the body is from above overlapped with a pressure absorber and to upper part of the turbulent reactor body is sideways mounted a labyrinth reactor.

It is also advantageous, when the turbulent reactor and the labyrinth reactor are set in a coat, whereas below the level of an end area of a base is in a bottom of the coat created an outlet branch for outflow of purified water.

In an optimal design the labyrinth reactor created with an outflow channel created with a plane base set between side walls of the coat and situated in crossway downward direction with slope from 5 to 40° to a horizontal plane, whereas either from sidewalls of the coat are contra flow in turns and crossway in direction of water flow made tabular barriers, which are mounted via their bottom walls to the base, or on the surface of the base is set a system of barriers of linear flow made with cylindrical columns.

By this new invention is reached higher efficiency and specific performance of a purifying device at decreased investment and operational costs. Another advantage of this solution is that it is possible to realize it also by modernization of existing or low efficient purifying devices.

Description of the figures on enclosed drawings

The particular examples of the device design according to the invention are schematically illustrated on enclosed drawings, where

fig.1 is a vertical crosscut of basic design of the device with a vertical turbulent reactor and a labyrinth reactor containing tabular barriers,
fig.2 is the device cut from fig.1 in the plane A-A,
fig.3 is a vertical cut of an alternative design of the device with a crossway upward directed turbulent reactor and a labyrinth reactor containing cylindrical columns ,
fig.4 is cut of the device from fig.3 in the plane A-A,
fig.5 is a partial cut of the device containing only turbulent reactor ,
figs.6 to 8 are microscope shots of iron based nanoparticles with definition $5\mu$m, $1\mu$m and 20nm.

The examples of carry out of the invention

The basic design of the device is created with a turbulent reactor 1 and a labyrinth reactor 2, which are mutually connected and set in a coat 3. The turbulent reactor 1 is created with a vertical cylindrical tubular body 11, which is in its lower part finished with a blinded horizontal elbow 12 creating a mixing chamber 16. The elbow 12 is on its front 121 procured with an inlet branch 122 of inflow of polluted water and in its lower part with an outlet branch 123. Into the body 11 is then in its lengthwise axis form above installed an inlet pipeline 13 of a reaction mixture dosing, flown in its lower part into the mixing chamber 16 and installed into an additional tank 5 procured with a dosing pump 51 and a mixing device 52 of the reaction mixture. An inner surface of the body 11 is procured with a system of the paddles 14 directed crossway against the movement of flowing water. To upper part of the body 11 of the turbulent reactor 1 is sideway mounted the labyrinth reactor 2 and from above is the body overlapped with a pressure absorber 15.

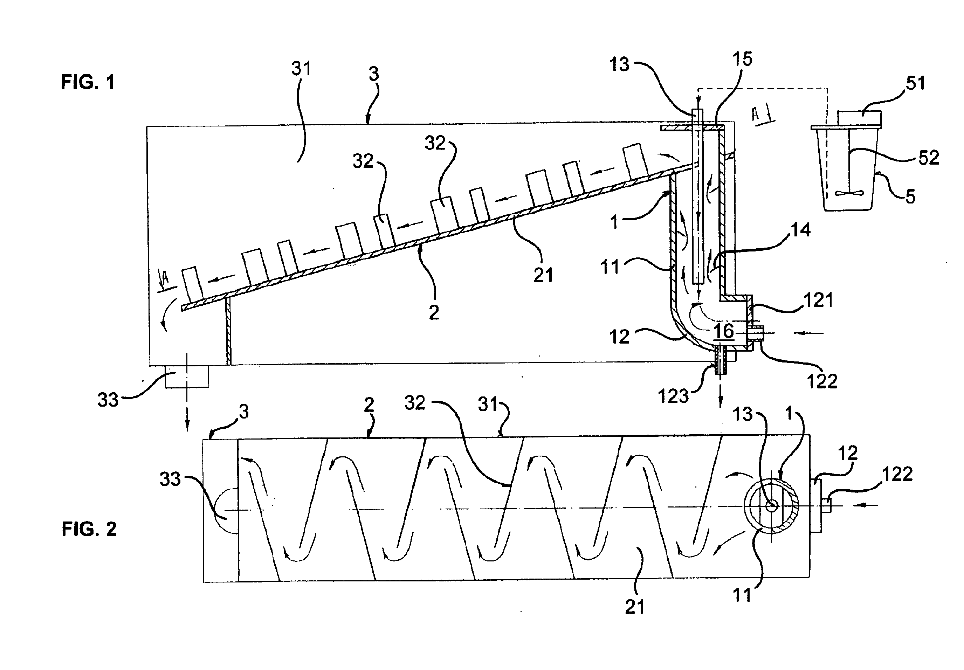

The labyrinth reactor 2 is created with an outflow channel created with a plane base 21, set between side walls 31 of the coat 3 and situated in crossway downward direction with a slope 5 to 40° to a horizontal plane. From the side walls 31 are installed tabular barriers contra flow in turns and crossway in direction of water flow and are mounted via their bottom walls to the base 21, whereby a labyrinth path is made for flowing water to be purified as it is evident form the fig.2. Under the level of an end part of the base 21 is in the bottom of the coat 3 made the outflow branch 33 for outflow of purified water into other non illustrated technological parts of the device for example into the system of sedimentation tanks.

At purification process polluted water is brought under pressure necessary to overcome the water column in the body 11 of the turbulent reactor 1 via the inlet branch 122 into its mixing chamber 16, wherein is in counter direction brought via supply pipeline 13 dosed concentrated mixture of water and nanoparticles of metals or other non-toxic substances, whose size vary in the range from 30 to 400 nm and whose specific weight $\rho$ has value

$$\rho \ \geq \ 10 \text{ N.m}^{-3},$$

thus he value equal or higher, than is specific weight of water. The pressure value $p$ of brought polluted water moves according to the kind and size of the device usually in the range of values

$$p \ = \ 0{,}1 \text{ to } 4{,}0 \ . \ 10^{5} \text{ N.m}^{-2}$$

In the mixing chamber 16 comes to turbulent movement of the media flowing in upward direction of the body 11, whereby comes to thorough and even blending of the nanoparticles with polluted water and is reached maximal possible mutual reaction of the nanoparticles and unwelcome admixtures in purified water. The creation of turbulent zones of the flow then also supports system of paddles 14 created and in turns placed on the inner surface of the body 11. After outflow of water to be purified from the turbulent reactor 1 into the labyrinth reactor 2 comes, at flowing between the barriers 32, to additional blending of the water with the nanoparticles and to decrease of dynamic power working in the device. After the outflow from the coat 1 it is necessary, before the supply to the consumer or into process, to deprive the water of impurities namely by sedimentation or filtration in non illustrated sedimentation tanks of filtration devices.

In term of atomic level nanoparticles of elemental iron, which are dosed in needed amount, provide electrons thus work as a reduction division. The contaminants work as acceptors of the electrons and iron as an electrons donor, whereas the speed of the reaction depends on the amount of accessible electrons. The speed of purifying reaction rises with increase of specific surface of nanoparticles, thus with decreasing sizes of the nanoparticles comes to increase of their reactivity and in the final result to increase of efficiency of decontamination process. At partition of the contaminants are by iron corrosion produced ferrous ions and hydrogen, which are reduction divisions to present contaminants. Iron nanoparticles gradually oxidate on iron oxides and together with insoluble remains of the contaminants are consequently caught on the filters or in the sedimentation tanks.

At experimental examination of functionality of introduced method, were in the device dosed two kind of materials, namely:

a) mixture of iron based nanoparticles sized from 50 to 280 nm, whose chemical composition included 98 to 99 weight % $Fe + Fe_2O_3$ and 1 to 2 weight% of nanoparticles Ti (possibly $TiO_2$) for water to be purified with concentration of potential heavy irons with value lower than 100 ppm. Specific area of the surface of the nanoparticles Fe° was 5 to 45 $m^2/g$ and their concentration ranges in the values from a 0,5 to 30 $g/m^3$.

b) mixture of iron based nanoparticles sized from 50 to 280 nm, whose chemical composition included 80 to 90 weight% Fe°, replenished with the nanoparticles FeO, $Fe_2O_3$ and admixtures of the nanoparticles Si, Ca < 4 weight%. The specific area of the surface of the nanoparticles Fe° was 5 to 45 $m^2/g$.

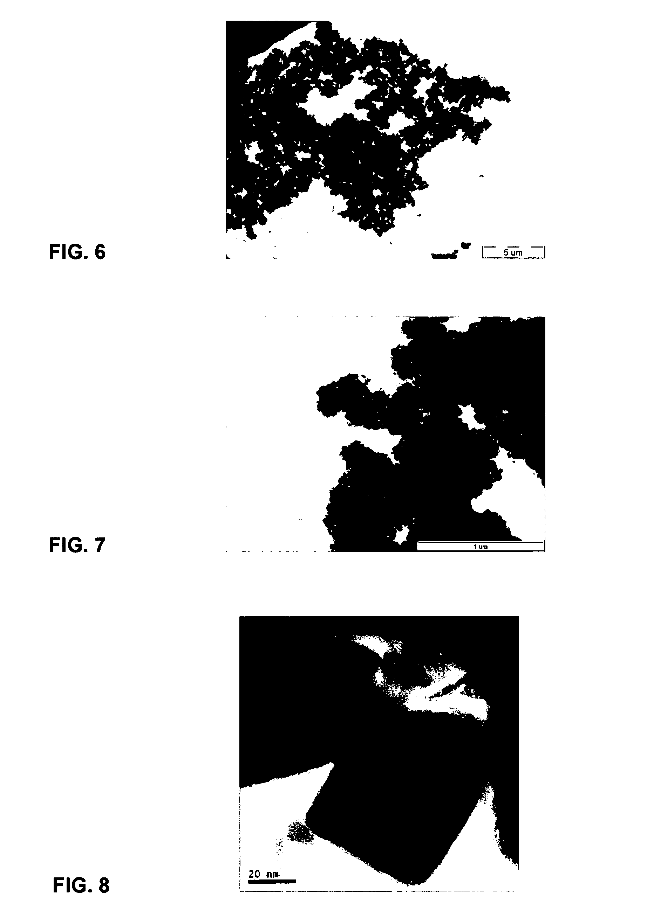

Microscopic shots at experiments of used iron based nanoparticles with different definition are then enclosed as figures.6 to 8.

The results of purification process for different kinds of undesired decomposable and contaminating substances are included in this table:

| Indicator | Inlet concentration | Outlet concentration | Unit | Uncertainty | Water purification ratio |
|---|---|---|---|---|---|
| Uranium | 4,9 | 0,02 | mg/l | ±10% | 99% |
| Iron | 60,8 | <0,01 | mg/l | ±10% | 99% |
| Manganese | 1,1 | 0,2 | mg/l | ±10% | 82% |
| Chrome | 0,7 | <0,010 | mg/l | ±10% | 86% |
| Copper | 0,13 | <0,010 | mg/l | ±10% | 93% |
| Nickel | 0,15 | 0,05 | mg/l | ±10% | 67% |
| Zinc | 0,84 | <0,02 | mg/l | ±10% | 98% |
| Phosphorus whole | 8,4 | 0,3 | mg/l | ±20% | 96% |
| Phosphates | 33,8 | 18,3 | mg/l | ±15% | 46% |
| Arsenate | 0,04 | <0,005 | mg/l | ±10% | 88% |
| Vinyl chloride | 1600 | 80,7 | μg/l | ±30% | 95% |
| 1,1,Acetylene dichloride | 9,8 | <0,3 | μg/l | ±30% | 97% |
| 1,2 Trans acetylene dichloride | 2,2 | <0,3 | μg/l | ±30% | 86% |
| Ammonia ions | 12,5 | <0,05 | mg/l | ±12% | 99% |

(continued)

| Indicator | Inlet concentration | Outlet concentration | Unit | Uncertainty | Water purification ratio |
|---|---|---|---|---|---|
| CHSK - Mn | 82,6 | <5 | mg/l | $\pm$10% | 94% |
| Fluorides | 21,2 | 0,27 | mg/l | $\pm$15% | 98% |
| Silicon oxide | 183 | 9,41 | mg/l | $\pm$15% | 95% |
| Calcium | 499 | 62,3 | mg/l | $\pm$15% | 88% |
| Natrium | 80,1 | 31,1 | mg/l | $\pm$10% | 62% |

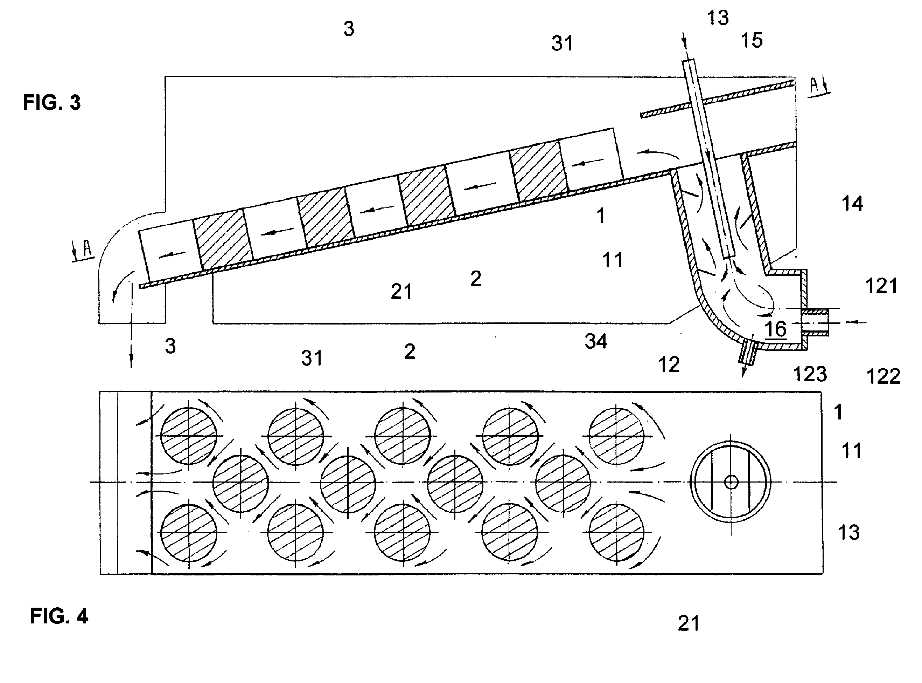

The described device is not only one possible construction design for realization of mentioned method of purification when at different kinds of alternative design the body 11 of the turbulent reactor 1 does not need to be situated vertically , but can be sloping with regard to vertical axis up to 45°, as it is illustrated on fig. 3. As well a labyrinth in the labyrinth reactor 2 does not need to be created with straight tabular barriers 32 installed from side walls 31 of the coat 3, but these barriers 32 can be differently rounded, eventually can be designed in the form of system of hurdles 34 of linear flow, for instance of cylindrical columns regularly set on the base surface 21, as it is illustrated on fig 4. The labyrinth reactor 2 then does not need to be procured with the barriers 32 or hurdles 34 or their combination, but a corridor for the flow of the water to be purified can be then created with non illustrated simultaneously installed guiding walls in wavy line shape.

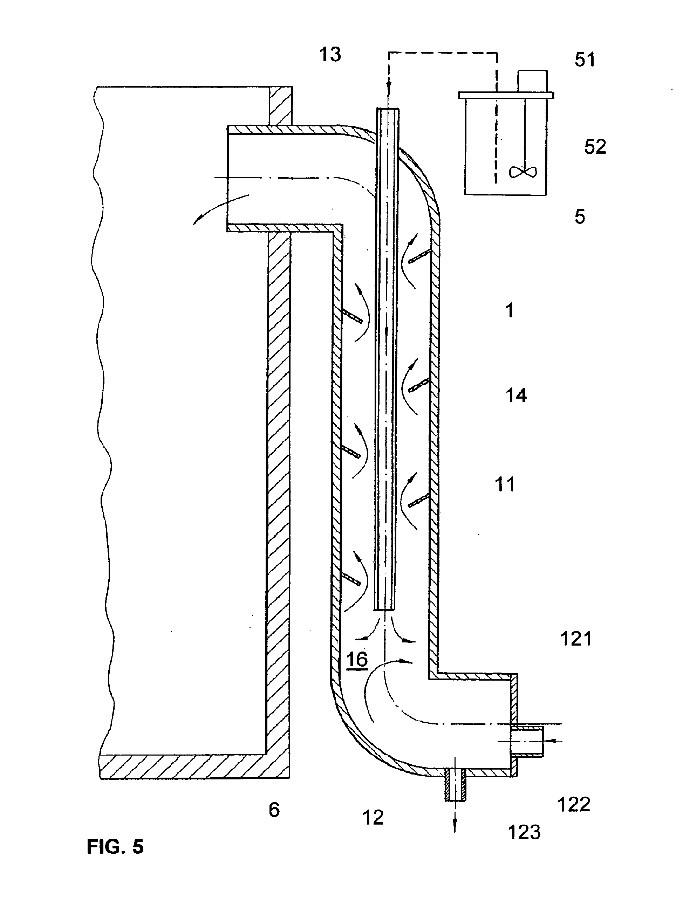

Finally then for particular kinds of water pollution and low concentration of decomposed substances the device can be created only with the turbulent reactor 1 with outflow directly into the sedimentation tank 6, as it is illustrated on fig.5.

For realization of purification process then do not need to be used the nanoparticles of elementary iron and its compounds, but according to the kind of pollution it is possible to use also silicon, silver, gold, zinc, copper, titan, nickel, aluminium, carbon, lead or other elements or mixtures of these elements. Likewise it does not to be used concentrated water solution of the nanoparticles, but these can be dosed in the powder form.

Industrial utility

The method of water purification and the device for realization of this process according to the invention is utilisable to purification of potable water, communal sewage water or industrial sewage water, eventually to water preparation for different technological processes.

**Claims**

1.  A method of water purification, especially of communal sewage water and water with contain of heavy metals and/or organic contaminants **wherein** into the polluted water brought under the pressure (p) of size

$$p = 0,1 \text{ to } 4,0 \cdot 10^5 \text{ N.m}^{-2}$$

from bottom into a turbulent reactor are to its mixing chamber in contra flow direction dosed nanoparticles of metals or other non-toxic substances or their mixtures, whose size ranges from 30 to 400 nm and whose specific weight $\rho$ has value

$$\rho \geq 10 \text{ N.m}^{-3}$$

and arisen mixture is after blending taken away by turbulent flowing at mutual interaction of the nanoparticles and undesired admixtures to filtration or sedimentation.

2.  The method of water purification according to the claim 1, **wherein** a mixture of water to be purified and the nanoparticles is, consequently after the turbulent flow, put through labyrinth flow, before an outflow to filtration or sedimentation.

3. The method of water purification according to the claims 1 or 2, **wherein** a material for production of the nanoparticles used in the purification process is chosen from group iron and/or silicon and/or silver and/or gold and/or zinc and/or copper and/or titan and/or nickel and/or aluminium and/or carbon and/or lead, eventually is made of the mixtures of these materials or their oxides.

4. A device for water purification, especially of water with contain of heavy metals and/or organic contaminants, **wherein** it consists of at least the turbulent reactor (1), created with a vertical or a crossway upward situated cylindrical tubular body (11), which is in its lower part finished with a horizontal elbow (12) creating a mixing chamber (16), where the elbow (12) is procured with an inlet branch (122) of an inflow of polluted water and with an outlet branch (123), whereas into the body (11) is from above installed a flow pipeline (13) for dosing of reaction mixture, which goes into a mixing chamber (4) and is opened into an additional tank (5) of the reaction mixture.

5. The device for water purification according to the claim 4, **wherein** the additional tank (5) is procured with a dosing pump (51) and with a mixing device (52) of the reaction mixture.

6. The device for water purification according to the claims 4 or 5, **wherein** an inner surface of the body (11) is procured with a system of paddles (14) directed crossway downward against the movement of flowing water.

7. The device for water purification according to some of the claims 4 to 7, **wherein** the body (11) is from above overlapped with a pressure absorber (15).

8. The device for water purification according to some of the claims 4 to 7, wherein to the upper part of the body (11) of the turbulent reactor (1) is sideway mounted a labyrinth reactor (2).

9. The device for water purification according to the claim 8, **wherein** the turbulent reactor (1) and the labyrinth reactor (2) are set in a coat (3), whereas under the level of end area of a base (21) is in a bottom of the coat (3) made an inlet branch (33) for an outflow of water to be purified.

10. The device for water purification according to the claim 9, **wherein** the labyrinth reactor (2) is created with an outflow channel created with a plane base (21), set between side walls (31) of the coat (3) and situated in crossway downward direction with a slope from 5 to 40° with regard to a horizontal plane.

11. The device for water purification according to the claim 10, **wherein** from the sidewalls (31) of the coat (3) are installed contra flow in turns and crossway in direction of water flow tabular barriers (32), which are mounted with their bottom walls to the base (21).

12. The device for water purification according to the claim 10, **wherein** on the surface of the base (21) is set a system of hurdles (34) of linear flow created with cylindrical columns.

EP 2 216 300 A1

FIG. 1

FIG. 2

FIG. 3

FIG. 4

EP 2 216 300 A1

13    51

52

5

1

14

11

121

16

6    12

FIG. 5

122

123

FIG. 6

FIG. 7

FIG. 8

Europäisches
Patentamt

European
Patent Office

Office européen
des brevets

# EUROPEAN SEARCH REPORT

Application Number

EP 10 46 6001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/101442 A1 (NTU VENTURES PRIVATE LTD [SG]; LEE CHEE CHOW [SG]; CHIANG KEN KIN KWON) 25 November 2004 (2004-11-25) * figures 1,3 * * paragraphs [0010], [0014], [0015], [0016] * ----- | 1-3 | INV. C02F1/70 B01F5/04 B01F5/06 B01F3/08 |
| Y | US 2007/256985 A1 (ZHAO DONGYE [US] ET AL) 8 November 2007 (2007-11-08) * claims 1-25 * * paragraphs [0002], [0006], [0014], [0015] * ----- | 1-3 | |
| X | US 5 124 035 A (DUNNE PATRICK F [CA] ET AL) 23 June 1992 (1992-06-23) * figures 1,2,5 * * column 1, lines 5-12 * * column 6, lines 4-11 * * column 3, line 16 - column 4, line 19 * ----- | 4-12 | |
| A | US 2008/035226 A1 (CONRAD WAYNE E [CA] ET AL) 14 February 2008 (2008-02-14) * figures 1-4 * * paragraphs [0001], [0002], [0003], [0005], [0036] * * claims 1-21 * ----- | 4-12 | TECHNICAL FIELDS SEARCHED (IPC) C02F B01F |

The present search report has been drawn up for all claims

| Place of search | Date of completion of the search | Examiner |
|---|---|---|
| Munich | 28 April 2010 | Galiana López, Paula |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 46 6001

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2010

| Patent document cited in search report | | Publication date | Patent family member(s) | | Publication date |
|---|---|---|---|---|---|
| WO 2004101442 | A1 | 25-11-2004 | NONE | | |
| US 2007256985 | A1 | 08-11-2007 | NONE | | |
| US 5124035 | A | 23-06-1992 | AU | 675406 B2 | 06-02-1997 |
| | | | AU | 1340492 A | 13-09-1993 |
| | | | CA | 2050534 A1 | 05-03-1992 |
| | | | WO | 9316960 A1 | 02-09-1993 |
| | | | DE | 69229878 D1 | 30-09-1999 |
| | | | EP | 0629178 A1 | 21-12-1994 |
| | | | JP | 7507958 T | 07-09-1995 |
| US 2008035226 | A1 | 14-02-2008 | NONE | | |

EPO FORM P0459

For more details about this annex : see Official Journal of the European Patent Office, No. 12/82